# EUROPÄISCHE PATENTSCHRIFT

(11) **EP 1 861 243 B1**
(45) Veröffentlichungstag und Bekanntmachung des Hinweises auf die Patenterteilung: **26.11.2008**
(21) Anmeldenummer: 06706991.4
(22) Anmeldetag: 16.02.2006
(51) Int. Cl.: B30B 5/06, C21D 9/00

(54) **ROLLSTAB**
ROLLER ROD
BARRE ROTATIVE

(30) Priorität: 19.03.2005 DE 102005012783
(43) Veröffentlichungstag der Anmeldung: 05.12.2007
(73) Patentinhaber: Siempelkamp Maschinen- und Anlagenbau GmbH & Co.KG, 47803 Krefeld (DE)
(72) Erfinder: PÜSCHEL, Ralf, 41564 Kaarst (DE); SEBASTIAN, Lothar, 47239 Duisburg (DE)
(74) Vertreter: von dem Borne, Andreas
(86) Internationale Anmeldenummer: PCT/EP2006/001390
(87) Internationale Veröffentlichungsnummer: WO 2006/099923

(56) Entgegenhaltungen:
- DE-C1- 4 219 099
- US-A- 4 442 331
- US-A- 5 088 398
- PATENT ABSTRACTS OF JAPAN Bd. 016, Nr. 106 (C-0919), 16. März 1992 (1992-03-16) & JP 03 281727 A (SUMITOMO METAL IND LTD), 12. Dezember 1991 (1991-12-12)
- PATENT ABSTRACTS OF JAPAN Bd. 2003, Nr. 11, 5. November 2003 (2003-11-05) & JP 2003 213329 A (FUJI ELECTRONICS INDUSTRY CO LTD), 30. Juli 2003 (2003-07-30)
- PATENT ABSTRACTS OF JAPAN Bd. 2003, Nr. 05, 12. Mai 2003 (2003-05-12) & JP 2003 013143 A (HONDA MOTOR CO LTD), 15. Januar 2003 (2003-01-15)
- PATENT ABSTRACTS OF JAPAN Bd. 2003, Nr. 12, 5. Dezember 2003 (2003-12-05) & JP 2004 292853 A (DENKI KOGYO CO LTD), 21. Oktober 2004 (2004-10-21)

## Beschreibung

Die Erfindung betrifft einen Rollstab, als Wälzkörperaggregat für eine kontinuierliche Presse mit endlos umlaufenden Stahlpressbändern, welche unter Zwischenschaltung der Rollstäbe gegen Pressenplatten abgestützt sind,
wobei der Rollstab zylindrisch mit vorgegebener Rollstablänge und vorgegebenen Rollstabdurchmesser aus Stahl ausgebildet ist,
wobei der Rollstab stirnseitig in den Rollstabenden Lagerbohrungen vorgegebener Bohrungstiefe unter Bildung hohlzylindrischer Endbereiche mit vorgegebener Wandstärke aufweist,
wobei in die Lagerbohrungen Rollstablagerbolzen mit vorgegebener Eindringtiefe einsetzbar oder eingesetzt sind und
wobei der Rollstab zumindest bereichsweise gehärtet ist. - Die Rollstäbe sind als Wälzkörperaggregate in einer kontinuierlichen Presse ausgebildet, wobei eine solche kontinuierliche Presse, z. B. zum Herstellen von Holzwerkstoffplatten, in ihrem grundsätzlichen Aufbau aus einem Pressenoberteil mit beheizbarer oberer Pressenplatte und einem Pressenunterteil mit beheizbarer unterer Pressenplatte besteht, wobei im Pressenoberteil und im Pressenunterteil endlos umlaufende Stahlpressbänder geführt sind, welche unter Zwischenschaltung der Rollstäbe gegen die Pressenplatten abgestützt sind. Die Rollstäbe sind mit Hilfe der endseitig angeschlossenen Rollstablagerbolzen an Rollstabketten bzw. Umlaufketten angeschlossen. Der Durchmesser derartiger Rollstäbe beträgt üblicherweise 15 mm bis 25 mm, die Rollstablänge liegt beispielsweise in einem Bereich zwischen 2 m und 2,5 m, z. B. in etwa 2,2 m bis 2,3 m.

Die aus der Praxis bekannten Rollstäbe der eingangs beschriebenen Art sind über die gesamte Rollstablänge randschichtgehärtet mit im Wesentlichen konstanter Härtetiefe ausgebildet. Dadurch wird der Verschleiß im Oberflächenbereich minimiert, während der Kern der Rollstangen selbst zäh-elastisch mit ausreichender Duktilität bleibt. Die insoweit bekannten Maßnahmen haben sich grundsätzlich bewährt. Die bekannten Rollstäbe sind jedoch weiterentwicklungsfähig.

Ein Rollstab als Walzkörperaggregat für eine kontinuierlich arbeitende Presse mit endlos umlaufenden Stahlbändern, welche an Rollstangen abgestützt sind, gemäß dem Oberbegriff des Anspruch 1, ist im Übrigen aus der US 5 088 398 A bekannt. Darin wird vorgeschlagen, bei der Verwendung von Stahlbändern von 2 mm Dicke Rollstangen mit einem Durchmesser von mindestens 20 mm einzusetzen. Für eine ausreichende Oberflächenhärte und zur Minimierung des Verschleißes sollen die Rollstangen auf einer Chrom-Molybdän-Legierung mit mindestens 0,3 % Kohlenstoffgehalt bestehen. Für eine Erhöhung der Lebensdauer und zur Intensivierung der Korrosionsarmut wird der für die Rollstangen verwendete Chrom-Molybdän-Nickel-Stahl mit mindestens 0,1 % Nickelgehalt angereichert.

Der Erfindung liegt die Aufgabe zugrunde, einen Rollstab der eingangs beschriebenen Art als Wälzkörperaggregat für eine kontinuierliche Presse, zu schaffen, welcher sich insgesamt durch minimalen Verschleiß bei gleichzeitig einwandfreier Funktion und niedrigen Fertigungskosten auszeichnet.

Zur Lösung dieser Aufgabe lehrt die Erfindung bei einem gattungsgemäßen Rollstab der eingangs beschriebenen Art, dass der Rollstab in den hohlzylindrischen Endbereichen über jeweils einen äußeren Längenabschnitt über die gesamte Wandstärke durchgehärtet und zwischen den Endbereichen über einen vorgegebenen inneren Längenabschnitt mit vorgegebener Randhärtetiefe randschichtgehärtet ist. Vorzugsweise nimmt die Randhärtetiefe von dem randschichtgehärteten inneren Längenabschnitt, welcher eine im Wesentlichen konstante Randhärtetiefe aufweist, in einem Übergangsabschnitt bis zu dem durchgehärteten äußeren Längenabschnitt kontinuierlich zu. - Die Erfindung geht dabei von der Erkenntnis aus, dass es zweckmäßig ist, mit einem über die Rollstablänge "inhomogenen" Härteverlauf zu arbeiten. So schlägt die Erfindung vor, dass in den hohlzylindrischen Endbereichen ein vollständig durchgehärteter Längenabschnitt vorgesehen ist, so dass der Verschleiß im Bereich der Lagerbohrungen durch die eingreifenden Lagerbolzen minimiert wird. Ein gleichsam "ovales Ausschlagen" der Lagerbohrung wird zuverlässig verhindert. Dennoch bleibt der Rollstab insgesamt ausreichend zäh-elastisch, da in dem "zentralen" Längenabschnitt zwischen den beiden endseitigen Aufnahmebohrungen bzw. Lagerbohrungen lediglich die Randschichten gehärtet sind. Auf diese Weise lässt sich der erfindungsgemäße Rollstab auch auf verhältnismäßig kostengünstige Weise fertigen.

Vorzugsweise erstreckt sich der äußere (durchgehärtete) Längenabschnitt (vom Rollstabende aus) in etwa bis zu der Eindringtiefe des Lagerbolzens oder etwas darüber hinaus, so dass in jedem Fall gewährleistet ist, dass der Bereich der Lagerbohrung, in welchen der Lagerbolzen eingreift, besonders verschleißfest ist. Die Eindringtiefe beträgt üblicherweise 50 % bis 90 %, vorzugsweise 60 % bis 80 %, z. B. etwa 70 % der Bohrungstiefe. Damit erstreckt sich der äußere Längenabschnitt etwa über 65 % bis 95 %, vorzugsweise 70 % bis 85 % der Bohrungstiefe. Der innere (randschichtgehärtete) Längenabschnitt mit im Wesentlichen konstanter Randhärtetiefe erstreckt sich (vom Zentrum des Rollstabs aus) in etwa bis zu den Enden der beidseitigen Lagerbohrungen. Von dem Ende der jeweiligen Lagerbohrung nimmt dann die Randschichthärte bis zu dem durchgehärteten Bereich kontinuierlich zu. Dabei hat die Erfindung erkannt, dass es zweckmäßig ist, wenn sich der durchgehärtete Bereich nicht über die volle Länge (bzw. Tiefe) der Lagerbohrung erstreckt, sondern wenn im Bereich des Endes der Lagerbohrung der randschichtgehärtete Übergangsabschnitt mit zur Rollstabmitte hin abnehmender Randschichthärte vorgesehen ist. Auf diese Weise werden unzulässige bzw. unerwünschte Spannungen am Übergang zwischen hohlzylindrischem und vollzylindrischem Bereich des Rollstabes vermieden, da der Rollstabkern in diesem Übergangsbereich nicht gehärtet ist und folglich eine ausreichende Duktilität aufweist.

Der Verlauf der Härtetiefe in dem Ubergangsabschnitt ist dabei vorzugsweise im Wesentlichen sinusförmig mit einem zentralen Wendepunkt. Das bedeutet, dass der Verlauf der Härtetiefe im Längsschnitt durch den Rollstab angenähert einer Sinusfunktion entspricht. Der Wendepunkt dieser Sinusfunktion ist in etwa mittig zwischen dem durchgehärteten Längenabschnitt und dem inneren randschichtgehärteten Längenabschnitt und folglich mittig in dem Übergangsabschnitt angeordnet.

In fertigungstechnischer Hinsicht besonders vorteilhaft ist eine Ausführungsform der Erfindung, bei welcher der Rollstab in dem äußeren (durchgehärteten) Längenabschnitt und/oder in dem inneren (randschichtgehärteten) Längenabschnitt und/oder in dem (randschichtgehärteten) Übergangsabschnitt im Wege des Induktionshärtens gehärtet und ggf. angelassen ist. Dazu wird eine an die Bauform des zu härteten Rollstabes angepasste Spule verwendet, die von einem hochfrequenten Wechselstrom durchflossen wird und den Rollstab umschließt. Die induzierten Wirbelströme, die durch den Skineffekt in die äußeren Werkstückschichten gedrängt werden, erwärmen diese Bereiche durch Widerstandserwärmung sehr schnell. Die Wärme entsteht dabei - anders als beispielsweise beim Flammhärten - im Inneren des Werkstücks. Insofern lassen sich sehr hohe Aufheizgeschwindigkeiten erreichen. Die Härtetiefe wird maßgeblich von der Frequenz des Wechselstroms bestimmt.

Nach einem weiteren Vorschlag der Erfindung ist vorgesehen, dass die Randhärtetiefe in dem inneren Längenabschnitt in etwa 0,5 mm bis 2,5 mm, vorzugsweise 1,0 mm bis 2,0 mm beträgt. Besonders vorteilhaft sind Ausführungsformen der Erfindung, bei welchen die Randhärtetiefe 1,2 mm bis 2,0 mm beträgt. Jedenfalls ist es zweckmäßig, wenn die Randhärtetiefe größer als 1 mm, vorzugsweise größer oder gleich 1,2 mm ist. Die Randhärtetiefe ist der senkrechte Abstand von der Oberfläche des gehärteten Werkstücks bis zu dem Punkt, an dem die Härte dem festgelegten Grenzwert entspricht. Dieser Grenzwert beträgt etwa 80 % der vorgeschriebenen Mindest-Oberflächenhärte.

Die Wandstärke in den hohlzylindrischen Endbereichen des Rollstabes beträgt in etwa 2 mm bis 8 mm, z. B. 3 mm bis 6 mm, vorzugsweise 4 mm bis 5 mm.

Vorzugsweise ist der Rollstab aus einem für das Randschichthärten geeigneten Stahl gefertigt. Dabei kann es sich insbesondere um einen Stahl nach DIN 17212 handeln. Besonders vorteilhaft sind Ausführungsformen, bei welchen der Rollstab aus Stahl mit der Bezeichnung C 53 G ausgebildet ist. Dieser Werkstoff wird auch als Cf 53 bezeichnet.

Das Induktionshärten wird vorzugsweise so durchgeführt, dass der Rollstab in den gehärteten Bereichen Härtegrade HRC 50 bis 60 aufweist. Vorzugsweise beträgt der Härtegrad HRC 52 bis 56. Besonders bevorzugt werden die entsprechenden Bereiche auf HRC 54 gehärtet. Dieses gilt sowohl für die randschichtgehärteten als auch für die durchgehärteten Bereiche. HRC meint dabei den Härtegrad gemessen nach dem ROCKWELL-C-Verfahren.

Gegenstand der Erfindung ist auch eine kontinuierliche Presse, insbesondere für die Herstellung von Holzwerkstoffplatten o. dgl., mit Pressenoberteil mit beheizbarer oberer Pressenplatte und Pressenunterteil mit beheizbarer unterer Pressenplatte sowie im Pressenoberteil und im Pressenunterteil endlos umlaufenden Stahlpressbändern, welche unter Zwischenschaltung der Rollstäbe gegen die Pressenplatten abgestützt sind. Die Rollstäbe sind dabei an Rollstabketten bzw. Umlaufketten geführt. Erfindungsgemäß sind die Rollstäbe wie beschrieben ausgebildet. Insofern kommt der Verwendung der erfindungsgemäßen Rollstäbe als Wälzkörperaggregate für kontinuierliche Pressen besondere Bedeutung zu.

Im Folgenden wird die Erfindung anhand einer lediglich ein Ausführungsbeispiel darstellenden Zeichnung näher erläutert. Es zeigen
- Fig. 1: einen erfindungsgemäßen Rollstab in einem Längsschnitt,
- Fig. 2: einen vergrößerten Ausschnitt X aus dem Gegenstand nach Fig. 1,
- Fig. 3: ausschnittsweise den Rollstab nach Fig. 1 mit angedeutetem Härtebild,
- Fig. 4: einen Ausschnitt Y aus dem Gegenstand nach Fig. 3 und
- Fig. 5: eine kontinuierliche Presse mit den erfindungsgemäßen Rollstäben in schematischer Darstellung.

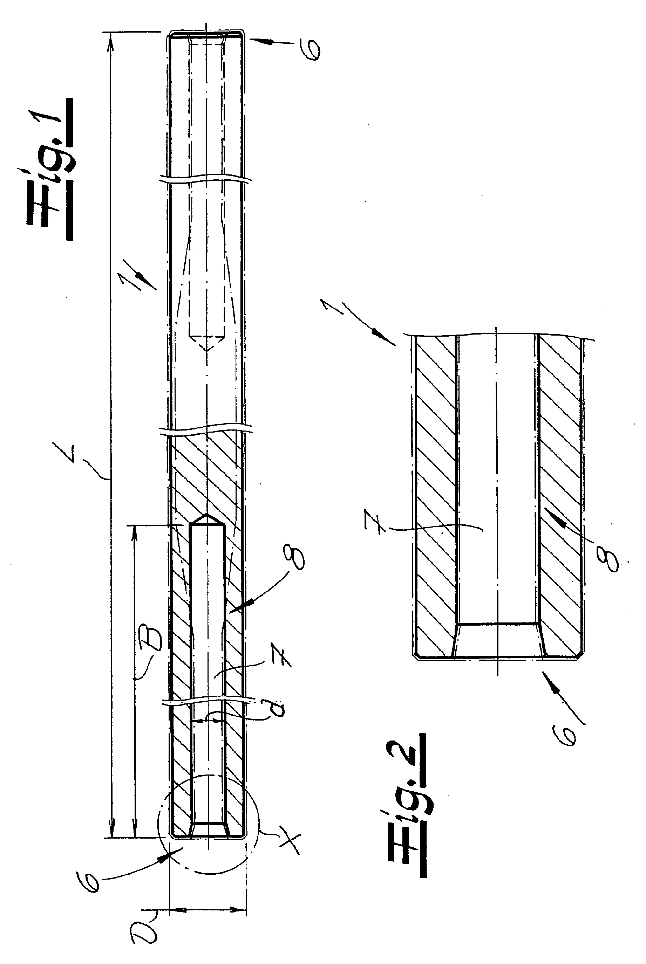

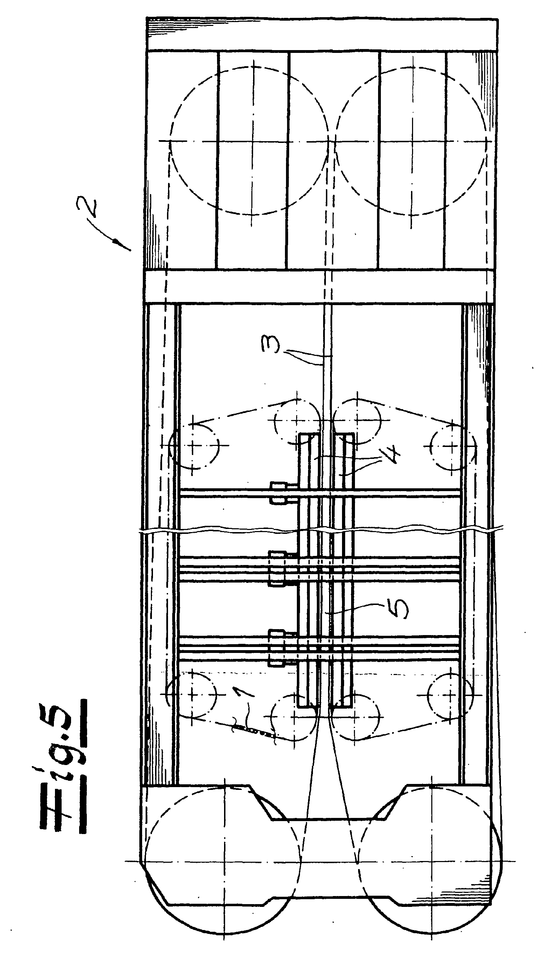

In Fig. 1 ist ein Rollstab bzw. eine Rollstange 1 dargestellt, welcher als Wälzkörperaggregat in einer kontinuierlichen Presse mit eingesetzt ist. Der Aufbau einer derartigen kontinuierlichen Presse 2 ist in Fig. 5 schematisch angedeutet. Die kontinuierliche Presse 2 weist in ihrem grundsätzlichen Aufbau ein Pressenoberteil mit oberer beheizbarer Pressenplatte 4 und ein Pressenunterteil mit unterer beheizbarer Pressenplatte 4 auf. Im Pressenoberteil sowie im Pressenunterteil sind endlos umlaufende Stahlpressbänder 3 unter Bildung eines Pressspaltes 5 geführt, wobei sich die Stahlpressbänder 3 unter Zwischenschaltung von Rollstäben 1 gegen die Pressenplatten abstützen. Die Rollstäbe sind dabei mittels Rollstablagerbolzen an endlos umlaufenden Rollstabketten geführt, die jedoch nicht dargestellt sind.

Der Rollstab 1 selbst ist zylindrisch mit vorgegebener Rollstablänge L und vorgegebener Rollstabdurchmesser D aus Stahl gefertigt. Stirnseitig weist der Rollstab 1 in den Rollstabenden 6 Lagerbohrungen 7 mit vorgegebener Bohrungstiefe B unter Bildung hohlzylindrischer Endbereiche 8 mit vorgegebener Wandstärke W auf. In die Lagerbohrungen sind die Rollstablagerbolzen 9 mit vorgegebener Eindringtiefe T einsetzbar bzw. eingesetzt. Über diese Rollstablagerbolzen 9 werden die Rollstäbe 1 in der kontinuierlichen Presse 2 an den Rollstabketten geführt.

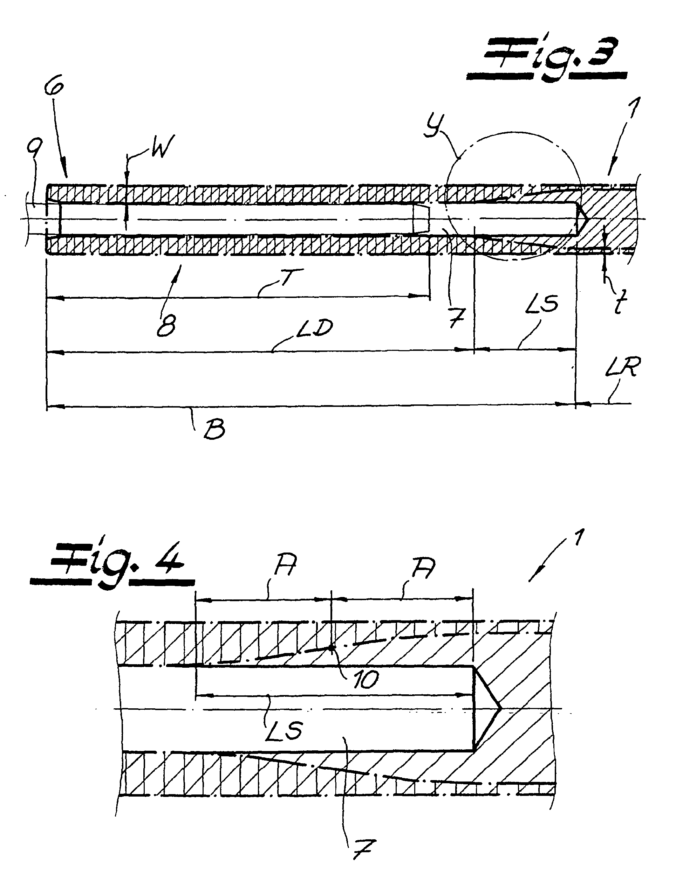

Der Rollstab 1 ist in den hohlzylindrischen Endbereichen 8 über jeweils einen äußeren Längenabschnitt LD über die gesamte Wandstärke W durchgehärtet. Zwischen den Endbereichen ist der Rollstab über einen vorgegebenen inneren Längenabschnitt LR mit vorgegebener Randhärtetiefe t randschichtgehärtet. Die Randhärtetiefe nimmt von dem randschichtgehärteten inneren Längenabschnitt LR, welcher eine im Wesentlichen konstante Randhärtetiefe t aufweist, in einen Übergangsabschnitt LS bis zu dem durchgehärteten äußeren Längenabschnitt LD kontinuierlich zu. Dieses ergibt sich insbesondere aus Fig. 3. Erfindungsgemäß wird der Rollstab 1 dabei sowohl in dem äußeren Längenabschnitt LD als auch in dem inneren Längenabschnitt LR wie in dem Übergangsabschnitt LS im Wege des Induktionshärtens gehärtet.

Fig. 3 zeigt, dass sich der äußere durchgehärtete Längenabschnitt von dem Rollstabende 6 aus über die Eindringtiefe T des Lagerbolzens 9 hinaus erstreckt. An der Grenze dieses äußeren durchgehärteten Längenabschnitts LD, beginnt der lediglich randschichtgehärtete Übergangsabschnitt LS mit zur Rollstabmitte hin abnehmender Randhärtetiefe. Dieser Übergangsabschnitt LS mit variabler bzw. unterschiedlicher Randhärtetiefe erstreckt sich in etwa bis zu dem Ende der Lagerbohrung 7. Im Bereich des Endes der Lagerbohrung 7 beginnt dann der innere, randschichtgehärtete Längenabschnitt LR mit konstanter Randhärtetiefe t. Mit anderen Worten erstreckt sich der zwischen den Endbereichen angeordnete zentrale, innere Längenabschnitt LR von der Rollstabmitte aus bis zu den Enden der beiden Aufnahmebohrungen 7.

In Fig. 4 ist angedeutet, dass der Verlauf der Härtetiefe in dem Übergangsabschnitt LS über die Wandstärke angenähert eine Sinusfunktion mit zentralem Wendepunkt 10 ist. Der Wendepunkt 10 ist dabei in etwa mittig in dem Übergangsabschnitt LS angeordnet, so dass der Wendepunkt 10 von dem äußeren durchgehärteten Längenabschnitt LD und von dem inneren randschichtgehärteten Längenabschnitt LR im Wesentlichen denselben Abstand A aufweist.

Im Ausführungsbeispiel beträgt die Rollstablänge L in etwa 2,2 m bis 2,3 m. Der Rollstabdurchmesser D beträgt in etwa 18 mm. Die Lagerbohrung 7 weist eine Bohrungstiefe B von etwa 135 mm und einen Bohrungsdurchmesser d von etwa 9 mm auf, so dass in den hohlzylindrischen Endbereichen 8 eine Wandstärke W von etwa 4,5 mm verbleibt. In den äußeren Längenabschnitten LD ist diese komplette Wandstärke 4,5 mm induktiv durchgehärtet und im Übrigen induktiv angelassen auf einen Wert HRC 54-3. In dem inneren Längenabschnitt LR beträgt die Randhärtetiefe im Ausführungsbeispiel 1,2 mm. Auch in diesem Bereich ist der Rollstab auf den Wert HRC 54-3 induktiv gehärtet und induktiv angelassen. Gleiches gilt für den Übergangsabschnitt ls.

Im Ausführungsbeispiel ist der Rollstab aus unlegiertem Edelstahl vom Typ Cf 53 gefertigt.

## Patentansprüche

1. Rollstab als Wälzkörperaggregat für eine kontinuierliche Presse mit endlos umlaufenden Stahlpressbändern,
wobei der Rollstab (1) zylindrisch mit vorgegebener Rollstablänge (L) und vorgegebenem Rollstabdurchmesser (D) aus Stahl ausgebildet ist,
wobei der Rollstab stirnseitig in den Rollstabenden (6) Lagerbohrungen (7) vorgegebener Bohrungstiefe (B) unter Bildung hohlzylindrischer Endbereiche (8) mit vorgegebener Wandstärke (W) aufweist,
wobei in die Lagerbohrungen (7) Rollstablagerbolzen (9) mit vorgegebener Eindringtiefe (T) einsetzbar oder eingesetzt sind und
wobei der Rollstab zumindest Bereichsweise gehärtet ist, **dadurch gekennzeichnet,**
**dass** der Rollstab (1) in den hohlzylindrischen Endbereichen (8) über jeweils einen äußeren Längenabschnitt (LD) über die gesamte Wandstärke (W) durchgehärtet und
zwischen den Endbereichen über einen vorgegebenen inneren Längenabschnitt (LR) mit vorgegebener Randhärtetiefe randschichtgehärtet ist.

2. Rollstab nach Anspruch 1, **dadurch gekennzeichnet, dass** die Randhärtetiefe von dem randschichtgehärteten inneren Längenabschnitt (LR), welcher eine im Wesentlichen konstante Randhärtetiefe (t) aufweist, in einem Übergangsabschnitt (LS) bis zu dem durchgehärteten äußeren Längenabschnitt (LD) kontinuierlich zunimmt.

3. Rollstab nach Anspruch 1 oder 2, **dadurch gekennzeichnet, dass** der Rollstab (1) in dem äußeren Längenabschnitt (LD), in dem inneren Längenabschnitt (LR) und/oder in dem Übergangsabschnitt (LS) im Wege des Induktionshärtens gehärtet ist.

4. Rollstab nach einem der Ansprüche 1 bis 3, **dadurch gekennzeichnet, dass** der äußere durchgehärtete Längenabschnitt (LD) sich in etwa bis zu der Eindringtiefe (T) des Lagerbolzens (9) oder um ein vorgegebenes Maß darüber hinaus erstreckt.

5. Rollstab nach einem der Ansprüche 1 bis 4, **dadurch gekennzeichnet, dass** der innere randschichtgehärtete Längenabschnitt (LR) mit im Wesentlichen konstanter Randhärtetiefe (t) sich in etwa bis zu dem Ende der Lagerbohrung (7) erstreckt.

6. Rollstab nach einem der Ansprüche 1 bis 5, **dadurch gekennzeichnet, dass** der Verlauf der Randhärtetiefe in dem Übergangsabschnitt (LS) im Wesentlichen sinusförmig mit einem zentralen Wendepunkt (10) ausgebildet ist.

7. Rollstab nach Anspruch 6, **dadurch gekennzeichnet, dass** der Wendepunkt (10) in etwa mittig in dem Übergangsabschnitt (LS) zwischen dem äußeren durchgehärteten Längenabschnitt (LD) und dem inneren randschichtgehärteten Längenabschnitt (LR) angeordnet ist.

8. Rollstab nach einem der Ansprüche 1 bis 7, **dadurch gekennzeichnet, dass** die Randhärtetiefe (t) in dem inneren Längenabschnitt (LR) in etwa 0,5 mm bis 2,5 mm beträgt.

9. Rollstab nach einem der Ansprüche 1 bis 8, **dadurch gekennzeichnet, dass** die Wandstärke (W) in dem durchgehärteten äußeren Längenabschnitt (LD) in etwa 2 mm bis 8 mm beträgt.

10. Rollstab nach einem der Ansprüche 1 bis 9, **dadurch gekennzeichnet, dass** der Rollstab aus einem legierten oder unlegierten Edelstahl gefertigt ist.

11. Rollstab nach einem der Ansprüche 1 bis 10, **dadurch gekennzeichnet, dass** der Rollstab aus Stahl mit der Bezeichnung C 53 G (bzw. Cf 53) gefertigt ist.

12. Rollstab nach einem der Ansprüche 1 bis 11, **dadurch gekennzeichnet, dass** der Härtegrad in den gehärteten Bereichen HRC 50 bis 60 beträgt.

13. Kontinuierliche Presse (2) mit Pressenoberteil mit beheizbarer oberer Pressenplatte (4), Pressenunterteil mit beheizbarer unterer Pressenplatte (4) sowie im Pressenoberteil und im Pressenunterteil endlos geführten Stahlpressbändern (3), welche unter Zwischenschaltung von Rollstäben (1) gegen die Pressenplatte (4) abgestützt sind, wobei die Rollstäbe (1) beidseitig an Rollstabketten geführt sind, **gekennzeichnet durch** Rollstäbe (1) nach einem der Ansprüche 1 bis 12.

## Claims

1. A roller rod as a roller body unit for a continuous press comprising continuously rotating steel strips,
wherein the roller rod (1) is made of steel and is formed cylindrical with a pre-determined roller rod length (L) and a pre-determined roller rod diameter (D) ,
wherein the roller rod comprises bearing bore holes (7) on the front sides in the roller rod ends (6) having a pre-determined bore depth (B) and forming hollow cylindrical end regions (8) with a pre-determined wall thickness (W),
wherein into the bearing bore holes (7), roller rod bearing bolts (9) are insertable or are inserted with a pre-determined penetration depth (T), and
wherein the roller rod is hardened at least in certain regions, **characterized in**
**that** the roller rod (1) is through-hardened in the hollow cylindrical end regions (8) respectively over an outer longitudinal section (LD) over the entire wall thickness (W), and
is surface-hardened between the end regions over a pre-determined inner longitudinal section (LR) having a pre-determined surface hardening depth.

2. The roller rod according to claim 1, **characterized in that** the surface hardening depth increases continuously in a transition section (LS) from the surface-hardened inner longitudinal section (LR) having a substantially constant surface hardness depth (t) to the through-hardened outer longitudinal section (LD).

3. The roller rod according to claim 1 or claim 2, **characterized in that** the roller rod (1) is hardened in the outer longitudinal section (LD), in the inner longitudinal section (LR), and/or in the transition section (LS) by way of induction hardening.

4. The roller rod according to any one of the claims 1 to 3, **characterized in that** the outer through-hardened longitudinal section (LD) extends approximately up to the penetration depth (T) of the bearing bolt (9) or beyond it by a pre-determined dimension.

5. The roller rod according to any one of the claims 1 to 4, **characterized in that** the inner surface-hardened longitudinal section (LR) having a substantially constant surface hardening depth (t) extends approximately to the end of the bore hole (7).

6. The roller rod according to any one of the claims 1 to 5, **characterized in that** the curve of the surface hardening depth in the transition section (LS) is formed substantially sinusoidal having a central inflection point (10).

7. The roller rod according to claim 6, **characterized in that** the inflection point (10) is arranged in the transition section (LS) approximately in the middle between the outer through-hardened longitudinal section (LD) and the inner surface-hardened longitudinal section (LR).

8. The roller rod according to any one of the claims 1 to 7, **characterized in that** the surface hardening depth (t) in the inner longitudinal section (LR) is approximately 0.5 mm to 2.5 mm.

9. The roller rod according to any one of the claims 1 to 8, **characterized in that** the wall thickness (W) in the through-hardened outer longitudinal section (LD) is approximately 2 mm to 8 mm.

10. The roller rod according to any one of the claims 1 to 9, **characterized in that** the roller rod is made of an alloy or non-alloy stainless steel.

11. The roller rod according to any one of the claims 1 to 10, **characterized in that** the roller rod is made of a steel with the designation C53 G (or Cf 53, respectively).

12. The roller rod according to any one of the claims 1 to 11, **characterized in that** the degree of hardness in the hardened regions is HRC 50 to 60.

13. A continuous press (2) comprising a press upper part with a heatable upper press plate (4), a press lower part with a heatable lower press plate (4), and, in the upper press part and in the lower press part, steel press strips (3) continuously guided therein, which are supported against the press plate (4) by intermediate roller rods (1), wherein the roller rods (1) are guided on both sides by roller rod chains, **characterized by** roller rods (1) according to any one of the claims 1 to 12.

## Revendications

1. Barre rotative servant de groupe de corps de roulement pour une presse continue comportant des bandes pressées en acier tournant en continu,
moyennant quoi la barre rotative (1) est configurée cylindriquement en acier avec une longueur de barre rotative (L) prédéterminée et un diamètre de barre rotative prédéterminé (D),
moyennant quoi la barre rotative présente du côté frontal des alésages de roulement (7) dans les extrémités de barre rotative (6) d'une profondeur d'alésage prédéterminée (B) en formant des zones d'extrémité (8) cylindriques creuses avec une épaisseur de paroi (W) prédéterminée,
moyennant quoi des boulons de roulement de barre rotative (9) sont insérés ou peuvent être insérés dans les alésages de roulement (7) avec une profondeur de pénétration (T) prédéterminée et
moyennant quoi la barre rotative est durcie au moins sur des portions, **caractérisée en ce que**
la barre rotative (1) est durcie à coeur dans les zones d'extrémités (8) cylindriques creuses sur une portion longitudinale extérieure (LD) respective sur la totalité de l'épaisseur de paroi (W) et
est durcie superficiellement entre les zones d'extrémité sur une portion longitudinale intérieure (LR) prédéterminée avec une profondeur de durcissement superficiel prédéterminée.

2. Barre rotative selon la revendication 1, **caractérisée en ce que** la profondeur de durcissement superficiel augmente continuellement depuis la portion longitudinale intérieure (LR) durcie superficiellement, qui présente une profondeur de durcissement superficielle (t) essentiellement constante, dans une portion de transition (LS) jusqu'à la portion longitudinale extérieure (LD) durcie à coeur.

3. Barre rotative selon la revendication 1 ou 2, **caractérisée en ce que** la barre rotative (1) est durcie dans la portion longitudinale extérieure (LD), dans la portion longitudinale intérieure (LR) et/ou dans la portion de transition (LS) sur le parcours de durcissement par induction.

4. Barre rotative selon une des revendications 1 à 3, **caractérisée en ce que** la portion longitudinale extérieure (LD) durcie à coeur s'étend approximativement jusqu'à la profondeur de pénétration (T) du boulon de roulement (9) ou dans une proportion prédéterminée au-delà.

5. Barre rotative selon une des revendications 1 à 4, **caractérisée en ce que** la portion longitudinale intérieure (LR) durcie superficiellement s'étend avec une profondeur de durcissement superficiel (t) essentiellement constante approximativement jusqu'à l'extrémité de l'alésage de roulement (7).

6. Barre rotative selon une des revendications 1 à 5, **caractérisé en ce que** le cours de la profondeur de durcissement superficiel dans la portion de transition (LS) est réalisé essentiellement en forme sinusoïdale avec un point d'inflexion central (10).

7. Barre rotative selon la revendication 6, **caractérisé en ce que** le point d'inflexion (10) est disposé approximativement au centre dans la portion de transition (LS) entre la portion longitudinale extérieure (LD) durcie à coeur et la portion longitudinale intérieure (LR) durcie superficiellement.

8. Barre rotative selon une des revendications 1 à 7, **caractérisée en ce que** la profondeur de durcissement superficiel (t) est comprise dans la portion longitudinale intérieure (LR) entre environ 0,5 mm et 2,5 mm.

9. Barre rotative selon une des revendications 1 à 8, **caractérisée en ce que** l'épaisseur de paroi (W) dans la portion longitudinale extérieure (LD) durcie à coeur est comprise entre environ 2 mm et 8 mm.

10. Barre rotative selon une des revendications 1 à 9, **caractérisée en ce que** la barre rotative est fabriquée dans un acier inoxydable allié ou non allié.

11. Barre rotative selon une des revendications 1 à 10, **caractérisée en ce que** la barre rotative est fabriquée dans un acier ayant la désignation C 53 G (respectivement Cf 53).

12. Barre rotative selon une des revendications 1 à 11, **caractérisée en ce que** le degré de durcissement dans les zones durcies est compris entre 50 et 60 HCR.

13. Presse continue (2) comportant une partie supérieure de presse avec une plaque de presse supérieure chauffable (4), une partie inférieure de presse avec une plaque de presse inférieure chauffable (4) ainsi que des bandes pressées en acier (3) introduites en continu tant dans la partie supérieure de presse que dans la partie inférieure de presse, lesquelles sont appuyées contre la plaque de presse (4) en intercalant des barres rotatives (1), moyennant quoi les barres rotatives (1) sont guidées des deux côtés sur des chaînes de barres rotatives, **caractérisé par** des barres rotatives (1) selon une des revendications 1 à 12.
